# EUROPEAN PATENT SPECIFICATION

(11) **EP 3 502 488 B1**
(45) Date of publication and mention of the grant of the patent: **17.02.2021**
(21) Application number: 18212010.5
(22) Date of filing: 12.12.2018
(51) Int. Cl.: F15B 21/041, F15B 1/26, B01D 53/26

(54) **HYDRAULIC RESERVOIR ASSEMBLY WITH DEHUMIDIFYING DEVICE**
RESERVOIRANORDNUNG MIT EINER ENTFEUCHTUNGSVORRICHTUNG
ENSEMBLE DE RÉSERVOIR AVEC UN DISPOSITIF DE DÉSHUMIDIFICATION

(30) Priority: 22.12.2017 DE 102017223754
(43) Date of publication of application: 26.06.2019
(73) Proprietor: Robert Bosch GmbH, 70442 Stuttgart (DE)
(72) Inventor: Eberger, Christer, 89141 Örnsköldsvik (SE)

(56) References cited:
- JP-A- 2016 161 019
- US-A- 4 827 719
- US-A1- 2008 282 704

## Description

The present invention pertains to a reservoir assembly, for instance to be used in connection with a hydraulic power unit for providing hydraulic fluid to the suction side of a pump and for receiving hydraulic fluid from a return line.

Such reservoir assemblies are well known and in wide-spread use. It is common knowledge, that with time the hydraulic fluid, usually a mineral oil, attracts water thus deteriorates in quality and endangers the fail-free operation of the pump and the hydraulic circuit feed by the pump.

Attempts have been made to prevent contact of the hydraulic fluid to an outside atmosphere as much as possible, as shown in EP 2 145 115 B1, where a bladder or membrane is provided inside a hydraulic reservoir to cover the surface of the oil. Also, the applicant has suggested in DE 10 2016 206 868 A1 to cover a surface of oil in a hydraulic reservoir with floating items, such as balls, to avoid the contact of the oil surface with air and to reduce the amount of air in the reservoir.

Further, devices are known that remove water from hydraulic oil, also described in EP 2 145 115 B1. A device that extract humidity from a sealed space is known from US 2008/282704 A1.

A setup, in which water is extracted from oil by exposing the oil surface to dry air is disclosed in JP 2016161019A.

The solutions so far have been costly to implement or are not very efficient in providing hydraulic fluid with constant quality and dryness.

The present invention provides a less costly and less complex solution to the aim of providing high quality hydraulic fluid constantly, by providing a reservoir assembly with the features of claim 1.
According to the invention, a reservoir assembly comprises a reservoir for holding an amount of hydraulic fluid, a space in the reservoir being configured to hold an amount of air above the hydraulic fluid, and a lid for sealing the reservoir and said space against the outside atmosphere. The inventive reservoir assembly further provides a dehumidifying device with a conduit, a fan and a condenser, arranged such that the fan draws air from said space through the conduit, conveys the air across a cooled surface of the condenser and returns the air to said space through the conduit.

In this manner, when the fan is operated, the air in the closed space above the hydraulic fluid is constantly streamed across the condenser and is dehumidified. Since the partial pressure of water vapor in the closed space is maintained low, in turn water evaporates from the hydraulic fluid into the air in said space to be again extracted by the condenser. Thus, a low humidity of the hydraulic fluid is maintained with high effectivity and low effort. Since the airstream can be constantly maintained by the fan, the reliability of the dehumidifying process is high.

The level of hydraulic fluid in a typical hydraulic reservoir "breathes" depending on the amount of oil presently absorbed by the hydraulic circuit. This usually requires the volume of air on top of the hydraulic fluid to change also. Thus air is expelled from a conventional reservoir or sucked into the reservoir, thereby allowing moisture from the outside atmosphere to enter the reservoir. When a low pressure air reservoir is provided that is connected to the air space either through a connector in the lid or through the conduit of the dehumidifying device, and it has a volumetric capacity that corresponds to a specified reciprocating volume of hydraulic fluid in the reservoir, the intake of outside moisture into the reservoir is prevented or greatly reduced and the partial pressure of water vapor in the air above the hydraulic fluid remains low at all times.

Further improvements of the inventive idea are subject of the dependent claims.

When the condenser comprises a cooled surface that is thermally connected to a cold side of a Peltier thermoelectric element, the installation effort is low. Only electricity needs to be provided to operate the condenser and thus the dehumidifying device. Since the hydraulic fluid and the air in the closed space above the hydraulic fluid is often warm or hot, usually 40°C to 90°C, the efficiency of water extraction from the air at the condenser is high.

The low pressure air reservoir can be configured as a bag of durable synthetic airtight material or it can be configured as a bellows. In each case an inexpensive large volume low pressure air reservoir is provided.

For protecting the low pressure air reservoir and the reservoir assembly from over pressure inflation or from excess deflation, it is advantageous to provide a breather device with an air relief valve and an air suction valve, that limit such over pressure or under pressure to specified values, like below 0.5 bar or 0.2 bar, preferably below 0.1 bar.

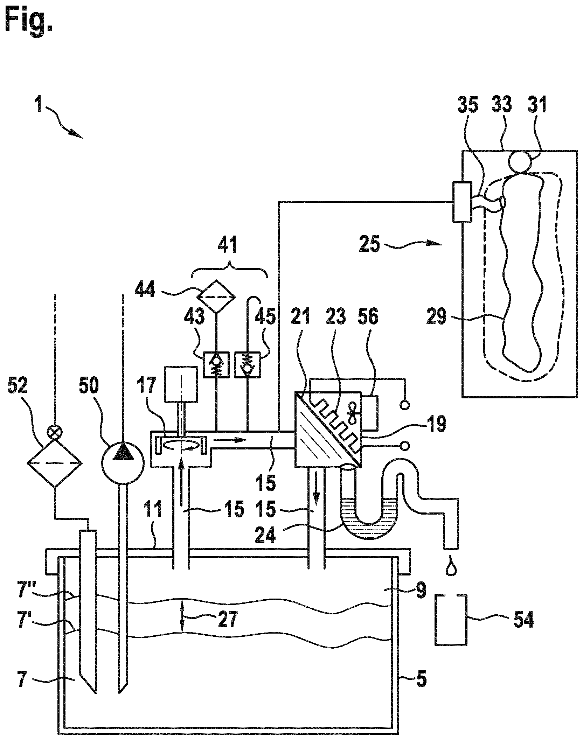

A better understanding of the invention will be obtained by the following description referring to the figure.

The only figure shows an exemplary embodiment of a reservoir assembly in accordance with the present invention.

According to the Fig., the reservoir assembly 1 comprises a reservoir 5 for hydraulic fluid 7, and a lid 11 to cover the reservoir 5 in a practically airtight manner. A pump 50 is provided to draw hydraulic fluid 7 from the reservoir 5 and supply a hydraulic circuit (not depicted) in the conventional manner. A suction pipe of the pump 50 passes through an aperture in the lid 11 and is sealed against the lid, so that the reservoir 5 remains airtight. Returning fluid is filtered by fluid return filter 52 before being admitted back through a further pipe into the reservoir 5. The return pipe is also sealed in an aperture in the lid 11.

The hydraulic fluid 7 is usually a mineral oil. When the mineral oil has a high content of water, the oil deteriorates faster. Further, in the hydraulic circuit, a high water content in the oil causes increased wear and possibly malfunctions of hydraulic components.

It is common, that the hydraulic fluid 7 in the reservoir reciprocates between a lower fluid level 7' and an upper fluid level 7", since the hydraulic circuit absorbs a different amount of fluid in accordance with different operation states, e.g. when a cylinder is extended, the fluid amount in the hydraulic circuit is lower, corresponding to a lower fluid level 7' in the reservoir 5. When e.g. a cylinder is retracted, hydraulic fluid 7 needs to be returned and the level in the reservoir 5 increases to level 7".

According to the invention, there is provided a conduit 15 through which air from an air filled space 9 above the fluid level 7' or 7" is constantly or at least intermittently circulated by the help of a fan 17, being electrically powered. The fan 17 is depicted as a radial fan, such as can be configured as a pipe bend or elbow, but of course other types of fans, like pipe fans are also usable.

In the conduit 15, a condenser 19 is provided. The air is guided across a cooled surface 21 of the condenser 19. Water vapor from the air precipitates at the cooled surface 21 and forms water drops that can be drained and guided to a container 54 outside of the condenser 19.

The cooled surface 21 is thermally connected or even provided by the cold side of a Peltier thermoelectric element 23, also known as thermoelectric cooler. Heat from the hot side of the Peltier thermoelectric element 23 is dissipated by a cooling fan 56. Preferably the cooled surface 21 is made from stainless steel. The cooled surface 21 can be flat, but it can also have fins to increase its surface area and to guide water to a drain part of the condenser 19. The drain is configured to be airtight up to a pressure difference of 0.5 bar, or 0.2 bar or 0.1 bar above or below atmospheric pressure, e.g. by using a siphon trap 24. Actually, the condenser 19 can be of a conventional type described in WO 2017/204697 A1.

Whenever the air of air space 9 is circulated across the condenser 19, especially, when the circulation fan 17 is operated for an extended amount of time or even constantly, the air in the air filled space 9 becomes very dry, meaning that is has a very low partial pressure for water vapor. Therefore, there will be no diffusion of water into the hydraulic fluid 7 from the air in space 9. On the contrary, the invention has the effect that the air in space 9 is so dry, that water evaporates from the surface 7', 7" of the hydraulic fluid 7, thus effectively dehumidifying the hydraulic fluid 7. This effect is further increased by a warm or hot temperature of the hydraulic fluid 7, which is usually between 40°C and 90°C when the hydraulic circuit is operated. Since the air in space 9 is not only dehumidified by condenser 19 but also cooled, the evaporation of water from the hydraulic fluid 7 into the air in space 19 is further enhanced. So all in all, moisture from the hydraulic fluid 7 is extracted and transported by the air in space 9 to the condenser 19, where it is drained and thus removed from the hydraulic reservoir assembly 1.

Further provided is a low pressure air reservoir 25 which is connected to the conduit 15 by a branch duct. The low pressure air reservoir 25 can alternatively be connected directly to a connector in the lid 11. In each case it is in communication with the space 9. Air that is expelled from space 9 due to a raising fluid level is guided into low pressure air reservoir 25. When air is sucked into space 9 due to a falling fluid level, the air is provided by low pressure air reservoir 25. Since low pressure air reservoir 25 is sealed against the atmosphere, no moisture can enter into space 9. Usually a reciprocating volume 27 of fluid between the upper level 7" and the lower level 7' is known or can be estimated. The volumetric capacity of the low pressure air reservoir 25 is configured to be at least as large as the reciprocating volume 27.

The low pressure air reservoir 25 includes a support frame 31 to which an airtight bag 29 of a durable synthetic airtight material is attached. The material can be a homogenous material like polypropylene or polyethylene or nylon. The material can also be a layered material, having a least a support layer of woven fiber. A housing 33 or cover is provided to protect the bag 29. When the housing is transparent, e.g. being made from acrylic glass, the stored amount of air and the condition of the bag 29 can easily be assessed. A flexible hose 35 is provided at least between the bag 29 and a connector in the housing 33. However, the flexible hose 35 can extend to a connector at conduit 15 or lid 11. The flexible hose 35 allows for movement due to inflation and deflation of the bag 29.

Alternatively, the low pressure air reservoir 25 can comprise a bellows instead of a bag 29.

The reservoir assembly 1 is further provided with a breather assembly 41. This includes an air relief valve 45, through which air can be expelled from space 9 and the reservoir 5, when the pressure inside the reservoir 5 exceeds the atmospheric pressure by more than 0.1 bar (alternatively 0.2 bar or 0.5 bar). Thus the reservoir 5, the conduit 15 and the low pressure air reservoir 25 are protected from overpressure. Of course the said items, specifically the low pressure air reservoir 25 are configured to withstand a pressure of 0.1 bar, 0.2 ba, or 0.5 bar respectively above atmospheric pressure.

The breather assembly 41 further includes an air suction valve 43 and an air filter 44. Thus clean air is admitted into space 9, when the pressure inside the reservoir 5 falls below the atmospheric pressure by more than 0.1 bar (alternatively 0.2 bar or 0.5 bar). Thus, the reservoir 5, the conduit 15 and the low pressure air reservoir 25 are protected from excessive deflation.

It should be understood that the breather assembly 41 will be closed most of the time. Only when the volume of reciprocating fluid 27 exceeds a current capacity of the low pressure air reservoir 25, air needs to be expelled or replenished into the reservoir 5. Accordingly, air exchange between the space 9 and the outside atmosphere is a seldom occurrence and thus only little moisture is admitted to space 9 from the outside. Such moisture however is quickly removed by condenser 19, keeping the air in space 9 dry and the dehumidifying of the hydraulic fluid constantly effective.

Most of the times, the reciprocation of hydraulic fluid between the levels 7' and 7" leads only to a communication of dry air between the space 9 and the low pressure air reservoir 25.

According to the invention, a reservoir assembly comprises a reservoir for holding an amount of hydraulic fluid, a space in the reservoir being configured to hold an amount of air above the hydraulic fluid, and a lid for sealing the reservoir and said space against the outside atmosphere. The inventive reservoir assembly further provides a dehumidifying device with a conduit, a fan and a condenser, arranged such that the fan draws air from said space through the conduit, conveys the air across a cooled surface of the condenser and returns the air to said space through the conduit.

In that manner, moisture from the air inside the reservoir and the hydraulic fluid is extracted and transported to the condenser, where the moisture is drained and thus removed from the hydraulic reservoir assembly.

### Reference list

- 1: reservoir assembly
- 5: reservoir
- 7: hydraulic fluid
- 7': lower level
- 7": upper level
- 9: space, air filled
- 11: lid
- 15: conduit
- 17: fan
- 19: condenser
- 21: cooled surface
- 23: Peltier thermoelectric element
- 24: syphon
- 25: low pressure air reservoir
- 27: reciprocating volume
- 29: airtight bag
- 31: support frame
- 33: housing
- 35: flexible hose
- 41: breather assembly
- 43: air suction valve
- 44: air filter
- 45: air relief valve
- 50: hydraulic pump
- 52: fluid return filter
- 54: collecting container
- 56: cooling fan

## Claims

1. Reservoir assembly for a hydraulic power unit, comprising a reservoir (5) for holding an amount of hydraulic fluid (7), a space (9) in the reservoir (5) being configured to hold an amount of air above the hydraulic fluid (7) and comprising a lid (11) for sealing the reservoir (5) and said space (9) against an outside atmosphere, and comprising a dehumidifying device,
**characterized in that**
the dehumidifying device comprises a conduit (15), a fan (17) and a condenser (19), arranged such that the fan (17) draws air from said space (9) through the conduit (15), conveys the air across a cooled surface (21) of the condenser (19) and returns the air to said space (9) through the conduit (15), and further a low pressure air reservoir (25) is provided that is connected to said space (9) either through a connector in said lid (11) or through said conduit (15), the low pressure air reservoir (25) having a volumetric capacity that corresponds to a specified reciprocating volume (27) of hydraulic fluid (7) in the reservoir.

2. Reservoir assembly according to claim 1, **characterized in that** the cooled surface (21) is thermally connected to a cold side of a Peltier thermoelectric element (23).

3. Reservoir assembly according to any of claims 1 or 2, **characterized in that** the low pressure air reservoir (25) is configured as a closed bag (29) of a durable airtight material.

4. Reservoir assembly according to claim 3, **characterized in that** the bag (29) is attached to a support frame (31) and/or to a housing (33), and preferably an elastic hose (35) is provided for connecting the bag (29) with the conduit (15) or with said connector in said lid (11).

5. Reservoir assembly according to any of claims 1 or 2, **characterized in that** the low pressure air reservoir (25) is configured as a bellows.

6. Reservoir assembly according to any of the previous claims, **characterized in that** a breather assembly (41) is provided that is connected to said space (9) either through a connector in said lid (11) or through said conduit (15), including an air relief valve (45) and an air suction valve (43).

7. Reservoir assembly according to claim 6, **characterized in that** the air relief valve (45) limits the air pressure in said space (9) to less than 0.2 bar, preferably less than 0.1 bar above an atmospheric pressure.

8. Reservoir assembly according to claim 6 or 7, **characterized in that** the air suction valve (43) admits air to said space (9), when the air pressure in said space (9) is more than 0.2 bar, preferably more than 0,1 bar below an atmospheric pressure.

## Patentansprüche

1. Reservoirbaugruppe für eine Hydraulikeinheit, umfassend ein Reservoir (5) zum Halten einer Menge von Hydraulikflüssigkeit (7), einen Raum (9) in dem Reservoir (5), der konfiguriert ist zum Halten einer Menge von Luft über der Hydraulikflüssigkeit (7), und umfassend einen Deckel (11) zum Abdichten des Reservoirs (5) und des Raums (9) gegen eine äußere Atmosphäre und umfassend eine Entfeuchtungsvorrichtung,
**dadurch gekennzeichnet, dass**
die Entfeuchtungsvorrichtung einen Kanal (15), ein Gebläse (17) und einen Kondensator (19) umfasst, derart angeordnet, dass das Gebläse (17) Luft aus dem Raum (9) durch den Kanal (15) zieht, die Luft über eine gekühlte Oberfläche (21) des Kondensators (19) befördert und die Luft in den Raum (9) durch den Kanal (15) zurückbefördert, und ferner ein Niederdruck-Luftreservoir (25) vorgesehen ist, das mit dem Raum (9) entweder durch ein Verbindungsstück in dem Deckel (11) oder durch den Kanal (15) verbunden ist, wobei das Niederdruck-Luftreservoir (25) eine volumenmetrische Kapazität aufweist, die mit einem spezifizierten Reziprokationsvolumen (27) von Hydraulikflüssigkeit (7) in dem Reservoir korrespondiert.

2. Reservoirbaugruppe nach Anspruch 1, **dadurch gekennzeichnet, dass** die gekühlte Oberfläche (21) mit einer kalten Seite eines thermoelektrischen Peltier-Elements (23) thermisch verbunden ist.

3. Reservoirbaugruppe nach einem der Ansprüche 1 oder 2, **dadurch gekennzeichnet, dass** das Niederdruck-Luftreservoir (25) als ein verschlossener Beutel (29) eines dauerhaften, luftdichten Materials konfiguriert ist.

4. Reservoirbaugruppe nach Anspruch 3, **dadurch gekennzeichnet, dass** der Beutel (29) an einem Tragerahmen (31) und/oder einem Gehäuse (33) angebracht ist und dass vorzugsweise ein elastischer Schlauch (35) zum Verbinden des Beutels (29) mit dem Kanal (15) oder mit dem Verbindungsstück in dem Deckel (11) vorgesehen ist.

5. Reservoirbaugruppe nach einem der Ansprüche 1 oder 2, **dadurch gekennzeichnet, dass** das Niederdruck-Luftreservoir (25) als ein Balgen konfiguriert ist.

6. Reservoirbaugruppe nach einem der vorhergehenden Ansprüche, **dadurch gekennzeichnet, dass** eine Entlüftungsbaugruppe (41) vorgesehen ist, die mit dem Raum (9) entweder durch ein Verbindungsstück in dem Deckel (11) oder durch den Kanal (15) verbunden ist, enthaltend ein Luftüberdruckventil (45) und ein Luftansaugventil (43).

7. Reservoirbaugruppe nach Anspruch 6, **dadurch gekennzeichnet, dass** das Luftüberdruckventil (45) den Luftdruck in dem Raum (9) auf weniger als 0,2 bar, vorzugsweise weniger als 0,1 bar, über einem atmosphärischen Druck begrenzt.

8. Reservoirbaugruppe nach Anspruch 6 oder 7, **dadurch gekennzeichnet, dass** das Luftansaugventil (43) Luft in den Raum (9) einlässt, wenn der Luftdruck in dem Raum (9) mehr als 0,2 bar, vorzugsweise mehr als 0,1 bar, unter einem atmosphärischen Druck beträgt.

## Revendications

1. Ensemble de réservoir pour une unité de puissance hydraulique, comprenant un réservoir (5) destiné à contenir une quantité de fluide hydraulique (7), un espace (9) dans le réservoir (5) étant configuré pour contenir une quantité d'air au-dessus du fluide hydraulique (7) et comprenant un couvercle (11) pour assurer l'étanchéité du réservoir (5) et dudit espace (9) contre une atmosphère extérieure, et comprenant un dispositif de déshumidification,
**caractérisé en ce que**
le dispositif de déshumidification comprend un conduit (15), un ventilateur (17) et un condenseur (19), agencés de telle sorte que le ventilateur (17) aspire l'air dudit espace (9) par le conduit (15), propulse l'air à travers une surface refroidie (21) du condenseur (19) et renvoie l'air vers ledit espace (9) par le conduit (15), et en outre un réservoir d'air à basse pression (25) est prévu qui est raccordé audit espace (9) soit par un raccord dans ledit couvercle (11) soit par le conduit (15), le réservoir d'air à basse pression (25) ayant une capacité volumétrique qui correspond à un volume à mouvement alternatif spécifié (27) de fluide hydraulique (7) dans le réservoir.

2. Ensemble de réservoir selon la revendication 1, **caractérisé en ce que** la surface refroidie (21) est raccordée thermiquement à un côté froid d'un élément thermoélectrique Peltier (23).

3. Ensemble de réservoir selon l'une quelconque des revendications 1 et 2, **caractérisé en ce que** le réservoir d'air à basse pression (25) est configuré sous la forme d'un sac fermé (29) d'un matériau durable étanche à l'air.

4. Ensemble de réservoir selon la revendication 3, **caractérisé en ce que** le sac (29) est fixé à un cadre de support (31) et/ou à un boîtier (33), et de préférence un tuyau élastique (35) est prévu pour raccorder le sac (29) au conduit (15) ou audit raccord dans ledit couvercle (11).

5. Ensemble de réservoir selon l'une quelconque des revendications 1 et 2, **caractérisé en ce que** le réservoir d'air à basse pression (25) est configuré sous la forme d'un soufflet.

6. Ensemble de réservoir selon l'une quelconque des revendications précédentes, **caractérisé en ce qu'**un ensemble prise d'air (41) est prévu qui est raccordé audit espace (9) soit par un raccord dans ledit couvercle (11) soit par ledit conduit (15), comprenant une soupape de décharge d'air (45) et une soupape d'aspiration d'air (43).

7. Ensemble de réservoir selon la revendication 6, **caractérisé en ce que** la soupape de décharge d'air (45) limite la pression d'air dans ledit espace (9) à moins de 0,2 bar, de préférence à moins de 0,1 bar au-dessus d'une pression atmosphérique.

8. Ensemble de réservoir selon la revendication 6 ou 7, **caractérisé en ce que** la soupape d'aspiration d'air (43) admet de l'air dans ledit espace (9), lorsque la pression d'air dans ledit espace (9) est à plus de 0,2 bar, de préférence à plus de 0,1 bar en dessous d'une pression atmosphérique.
